# EUROPÄISCHE PATENTANMELDUNG

(11) **EP 1 085 386 A1**
(43) Veröffentlichungstag der Anmeldung: **21.03.2001**
(21) Anmeldenummer: 00113650.6
(22) Anmeldetag: 28.06.2000
(51) Int. Cl.: G05B 11/28

(54) **Elektrisch ansteuerbare Antriebseinrichtung**

(30) Priorität: 15.09.1999 DE 29916114 U
(71) Anmelder: KUHNKE GmbH, D-23714 Malente (DE)
(72) Erfinder: Gau, Bernhard, 72622 Nürtingen (DE); Klocke, Harald, 23714 Malente (DE)
(74) Vertreter: Wilcken, Thomas, Dipl.-Ing.

(57) **Zusammenfassung**

Die Antriebseinrichtung (1) besteht aus wenigstens einem elektrisch betreibbaren Aktor (A) und einer Steuerung (2) mit zugehörigem Schalter (S), durch welchen der Aktor (A) in einem elektrisch eingeschalteten ersten Betriebszustand mit einer Grundspannung betrieben ist, um eingeschaltet eine Minimalleistung abzugeben. Der Schalter (S) schaltet den Aktor (A) in einem zweiten Betriebszustand zur Abgabe einer Maximalleistung auf einen höheren maximalen Spannungswert und bei Bedarf den Aktor wieder auf die Grundspannung zurück. Zur variablen Vorgabe von Leistungen zwischen der Minimal- und der Maximalleistung des Aktors (A) kann der Grundspannung eine höhere Spannung als die Grundspannung variabel so zugeschaltet werden oder auch die Grundspannung durch eine höhere Spannung variabel so ersetzt werden, dass der Effektivwert der Aktor (A) anliegenden Spannung variabel zwischen der Grundspannung und der Maximalspannung eingestellt werden kann.

## Beschreibung

Die Erfindung betrifft eine elektrisch ansteuerbare Antriebseinrichtung mit wenigstens einem elektrisch betreibbaren Aktor und einer Steuerung mit zugehörigem Schalter, durch welchen der Aktor in einem elektrisch eingeschalteten ersten Betriebszustand mit einer Grundspannung betrieben ist, um eingeschaltet eine Minimalleistung abzugeben, wobei der Schalter den Aktor in einem zweiten Betriebszustand zur Abgabe einer Maximalleistung auf einen höheren maximalen Spannungswert schaltet und bei Bedarf wieder auf die Grundspannung zurückschaltet.

Derartige Einrichtungen finden sich u. a. in Geräten zur Förderung fluidischer Medien, z. B. Gase oder Flüssigkeiten, ebenso auch in Geräten zur Förderung und Abfüllung von Schüttgütern, wie Granulaten und dergleichen.

Hierbei ist in einem ersten Betriebszustand der Aktor elektrisch in Reihe mit einem Bauteil, z. B. mit einem Ohm'schen Widerstand, geschaltet, so dass der Aktor in diesem ersten Betriebszustand nur eine entsprechend vorbestimmte Minimalleistung abgibt. Andererseits besteht die Möglichkeit, durch den Einsatz einer geeigneten Steuerung den Aktor in einem zweiten Betriebszustand zu betreiben. Hierbei wird durch Schalter der Steuerung das in Reihe geschaltete Bauteil elektrisch überbrückt und dem Aktor ein maximaler Spannungswert zur Abgabe einer Maximalleistung zur Verfügung gestellt.

In der Praxis wird dieses beispielsweise in Klima- bzw. Lüftungsanlagen genutzt. Durch entsprechende Vorgaben an die Steuerung können die umgewälzten Luftmengen auf einen Minimal- und auf einen Maximalwert eingestellt werden.

Nachteilig bei diesen bekannten Antriebseinrichtungen ist, dass hier letztlich nur zwei Leistungsstufen erreichbar sind, nämlich die bei Reihenschaltung des Aktors mit dem elektrischen Baustein minimale Leistungsstufe und die - nach schaltungstechnischer Überbrückung des Bauteiles und Anlegen des Aktors an den maximalen Spannungswert - maximale Leistungsstufe.

Es ist auch bekannt, Aktoren durch eine pulsbreitenmodulierte Versorgungsspannung in ihrer abzugebenden Leistung zu beeinflussen. Hierbei hat es sich gezeigt, dass in einem solchen Betrieb elektrische und/oder elektromagnetische Störgrößen auftreten, die sowohl in das Spannungsversorgungsnetz als auch in die Umgebung einstreuen. Dieses wirkt sich besonders dann aus, wenn die volle Versorgungsspannung mit steilen Anstiegsflanken pulsbreitenmoduliert getaktet ist. Für diese Art der Steuerung sind teuere Bauelemente erforderlich, die die Spannung in jedem Pulstakt von Null auf den maximalen Spannungswert bzw. vom maximalen Spannungswert auf Null schalten.

Aus diesen Nachteilen ergibt sich die Aufgabe, eine Antriebseinrichtung mit zugehöriger Steuerung vorzuschlagen, die bei geringen elektrischen und elektromagnetischen in das Versorgungsnetz und in die Umgebung einstreuenden Störfeldern gleichzeitig auch eine geringe Störanfälligkeit gegen einstreuende Störungen dieser Art aufweist und gleichermaßen zwischen einer Minimal- und einer Maximalleistung frei wählbare Leistungsstufen bei preiswerter Herstellung bietet.

Ausgehend von einer gattungsgemäßen Antriebseinrichtung der eingangs erwähnten Art wird diese Aufgabe so gelöst, dass zur variablen Vorgabe von Leistungen zwischen der Minimal- und der Maximalleistung des Aktors der Grundspannung eine höhere Spannung als die Grundspannung variabel so zuschaltbar ist oder die Grundspannung durch die höhere Spannung variabel so ersetzbar ist, dass der Effektivwert der am Aktor anliegenden Spannung variabel zwischen der Grundspannung und der Maximalspannung einstellbar ist.

Die erwähnte höhere Spannung wird pulsbreitenmoduliert, wobei zur variablen Vorgabe von Leistungen zwischen der Minimal- und der Maximalleistung der Grundspannung die pulsbreitenmodulierte Spannung variabel so zugeschaltet ist oder die Grundspannung durch die pulsbreitenmodulierte Spannung so variabel ersetzt wird, dass der Effektivwert der am Aktor anliegenden Spannung variabel zwischen der Grundspannung und der Maximalspannung eingestellt werden kann.

Bei offenem Schalter wird der Aktor mit der Grundspannung und bei geschlossenem Schalter mit der unter anderem von der Pulsbreite abhängigen höheren Spannung versorgt. Zu diesem Zweck liegt der Schalter parallel zu einem einen elektrischen Verbraucher darstellenden Bauteil, wobei der Schalter im geschlossenen Zustand dieses Bauteil überbrückt und der Aktor für die Zeit des geschlossenen Zustandes des Schalters mit der Maximalleistung betrieben wird. Weiterhin ist dem Bauteil ein durch eine geeignete Ansteuerung in seinen Werten änderbarer Widerstand parallel zu- und abschaltbar zugeordnet. Weiterhin kann der Aktor im Falle eines Defektes einer die Antriebseinrichtung steuernden Steuereinrichtungen immer entweder mit der Grundspannung oder der Maximalspannung betrieben werden.

Wenn die Antriebseinrichtung buskompatibel ausgebildet wird, kann ihre Energieversorgung aus einem Bussystem erfolgen. Andererseits ist auch die Energieversorgung der Antriebseinrichtung durch wenigstens eine separate Einspeisung möglich, wobei in beiden erwähnten Energieversorgungsfällen die Grundspannung vorwählbar eingestellt werden kann.

Der Aktor wird, wenn er elektrisch eingeschaltet ist, in einem ersten Betriebszustand stets mit einer Grundspannung betrieben, und der Aktor gibt somit bereits seine erforderliche Minimalleistung ab. In einer ersten Ausführung wird diese Grundspannung in der Weise erreicht, indem der Aktor in elektrischer Reihenschaltung mit einem elektrischen Bauteil, z. B. einem Widerstand, an die Spannung des Versorgungsnetzes gelegt ist. Ein solcher Widerstand kann u. a. auch der Innenwiderstand eines mit dem Aktor in Reihe geschalteten weiteren Aktors sein. In anderer Ausführung wird die Grundspannung dadurch erreicht, dass der Aktor in seinem ersten Betriebszustand an ein separates, zweites Versorgungsnetz mit einem Spannungswert der Grundspannung gelegt ist.

Der Aktor wird immer dann in seinem ersten Betriebszustand mit der Grundspannung betrieben, wenn der Schalter der Steuerung offen ist. Wird der Schalter in vorgegebener Weise geschlossen, liegt der Aktor über sein Versorgungsnetz an Maximalspannung und kann seinen maximalen Stromwert aufnehmen. Wird der Aktor über zwei voneinander unabhängige Versorgungsnetze betrieben, ist dafür zu sorgen, dass auch während des Umschaltens bzw. nach jedem Umschalten diese beiden Netze voneinander getrennt bleiben. In bekannter Weise können hier z. B. eine Diode oder ein Schalter eingesetzt werden.

Wird der Schalter getaktet, d. h. in vorgegebener Weise geöffnet bzw. geschlossen, so wird in geschlossenem Zustand das einen elektrischen Verbraucher darstellende Bauteil überbrückt und der Aktor direkt an das Versorgungsnetz und somit an die Maximalspannung zur Abgabe seiner Maximalleistung gelegt. Nach vorgegebener Einschaltzeit öffnet der Schalter für eine ebenfalls vorgegebene Ausschaltzeit, so dass sich aus dem Taktverhältnis zwischen Öffnen und Schließen des Schalters eine taktspezifische Effektivspannung am Aktor einstellt. Dieses Verfahren ist die an sich bekannte pulsbreitengesteuerte Modulation, die jedoch von spannungslos auf Maximalspannung bzw. von Maximalspannung auf spannungslos taktet.

Der Erfindungsgedanke beruht also wesentlich darauf, dass die pulsbreitengesteuerte modulierte Spannung zur Erreichung einer höheren Abgabeleistung auf der Grundspannung aufsetzt bzw. diese überlagert oder je nach Schaltung diese übergangslos ersetzt. Hierdurch ergeben sich erheblich geringere elektrische und elektromagnetische Störeinflüsse sowohl für die Umgebung als auch für das elektrische Versorgungsnetz, als wenn der Aktor ausschließlich pulsbreitenmoduliert von spannungslos auf Maximalspannung oder umgekehrt einund ausgeschaltet wird. Da der z. B. als Elektromotor ausgebildete Aktor bereits bei seiner Grundspannung und seiner minimal abgegebenen Leistung an eine entsprechende, durch den Aktor zu bewegende Masse gekoppelt ist, wirkt sich ein elektrisches Anheben bzw. Reduzieren der Aktorleistung u. a. nicht durch störende Geräuschentwicklungen aus. Vielmehr erfolgt ein "sanftes" Hoch- und Herunterfahren der Leistung. Vorteilhaft ist auch, dass Aktorgeräusche, die durch das Takten pulsbreitenmodulierter Leistung bedingt sind und als äußerst unangenehm empfunden werden, durch diese vorgeschlagene Art der Ansteuerung unterbleiben.

In anderer Ausführung ist dem Bauteil ein durch eine Ansteuerung in seinen Werten änderbarer Widerstand parallel zu- und abschaltbar zugeordnet. Die Änderung der Widerstandswerte kann analog z. B. durch ein Potentiometer oder digital u. a. durch elektronische Ansteuerung einzelner Widerstandswerte aus einer Widerstandskaskade erfolgen.

Es ist hinlänglich bekannt, dass jede Induktivität, wie beispielsweise auch die Spule eines ansteuerbaren Aktors, beim Abschalten eine Abschaltinduktion hervorruft, die als Spannung messbar ist. Die Höhe dieser Spannung kann ein Vielfaches der elektrischen Versorgungsspannung sein. Diese Spannungsspitzen wirken ohne geeignete Maßnahmen häufig in das elektrische Versorgungsnetz zurück und sind hier für andere Elektrogeräte extrem störend. Gleichzeitig bewirkt die Abschaltinduktion auch elektromagnetische Felder, die ebenfalls andere elektrische Geräte und die Umgebung nachteilig beeinflussen können.

Bei der erfindungsgemäßen Einrichtung werden die Spannungsspitzen des Aktors durch das mit dem Aktor in Reihe geschaltete elektrische Bauteil stark gedämpft, so dass störende Einflüsse der durch die Pulsbreitenmodulation bedingten Abschaltinduktionen reduziert sind.

Bei sicherheitsrelevanten Einsatzbedingungen der Antriebseinheit ist es vorteilhaft, der Steuerung in bekannter Weise eine hierarchisch übergeordnete Ausfallüberwachungssteuerung zuzuordnen. Im Folgenden wird die somit hierarchisch untergeordnete Steuerung, die den Schalter für die Aktorsteuerung einschließt, der Einfachheit halber "erste Steuerung" genannt.

Als zweckmäßig hat sich herausgestellt, wenn die erste Steuerung und die Ausfallüberwachungssteuerung als eine gemeinsame Steuereinrichtung miteinander korrespondieren und in bevorzugter Ausführung eine hardwaremäßige gemeinsame Steuer- Baueinheit bilden, die z. B. über eine Signalstrecke, die als Busstrecke ausgebildet sein kann, mit einer wiederum übergeordneten Mastersteuerung korrespondieren kann.

In weiter ausgestalteter Ausführung korrespondiert jede, also die vorerwähnte erste Steuerung, die Ausfallüberwachungssteuerung bzw. die gemeinsame Steuereinrichtung, jeweils für sich selbständig auf der Signalstrecke mit der Mastersteuerung. Die Signalstrecke kann drahtgebundener Art sein, aber auch als Lichtwellenleiter, als Funk-, Infrarot-, Ultraschallstrecke und dergleichen ausgebildet sein.

Es ist zweckmäßig, sowohl die Steuereinrichtung der Antriebseinrichtung als auch die übergeordnete Mastersteuerung so zu konzipieren, dass auf der Signalstrecke ein bidirektionaler Signalfluss erfolgen kann. Hierbei lassen sich einerseits aus der Mastersteuerung Steuersignale in die Steuereinrichtung einspeisen, andererseits kann die Steuereinrichtung in der Lage sein, beispielsweise bei Fehlererkennung und Fehlerdiagnose diesbezügliche Gegenmaßnahmen einzuleiten, durchzuführen und diesbezügliche Signale der übergeordneten Mastersteuerung zu übermitteln.

Bei entsprechender Ausgestaltung einer Steuereinrichtung wird man dieser gegebenenfalls eine sogenannte dezentrale Intelligenz implementieren. Das bedeutet, dass die Steuereinrichtung u. a. mit wenigstens einem elektrischen Steuerbaustein bestückt ist, in welchem entsprechende Unterprogramme als Algorithmen abgelegt werden können bzw. abgelegt sind.

Über entsprechende softwaremäßig eingeschriebene Programme bzw. vorgegebene Algorithmen ermöglicht eine solche Ausgestaltung beispielsweise eine Plausibilitätsprüfung eingehender Signale und auch eventueller Rückmeldesignale. Weiterhin sind eine Selbstüberwachung sowohl der Ausfallüberwachungssteuerung, der ersten Steuerung und zusätzlich auch eine Überwachung der ausgeführten Aktorfunktionen ebenfalls möglich. Bei Fehlererkennung lässt sich somit bereits innerhalb der Steuereinrichtung eine Kategorisierung des Fehlers vornehmen, wobei die Steuereinrichtung entsprechend der Zuordnung der Fehlerkategorie gegebenenfalls auf eine interne Alternativ- Programmabarbeitung zurückgreift oder bei einem Fehler, der nicht in die interne Fehlerkategorie eingeschrieben ist, z. B. ein entsprechendes Rückmeldesignal an die Mastersteuerung sendet.

Bei einem Totalausfall der ersten Steuerung bzw. der Ausfallüberwachungssteuerung nimmt die Steuereinrichtung zwangsweise einen Modus ein, der stets eine Versorgung des Aktors mit seiner Maximal- bzw. Minimalleistung bis hin zum gewollten Abstellen des Aktors sicherstellt. Auch dieser Zustand kann als Rückmeldesignal zur Verfügung stehen.

Erkennt die Ausfallüberwachungssteuerung den Ausfall des Aktors, wird ein entsprechendes Signal z. B. an die übergeordnete Mastersteuerung rückgemeldet. Gleichzeitig ist es möglich, durch dieses Signal erforderlichenfalls ein vorgegebenes Notprogramm zu starten und abzufahren. Dieses Programm kann sowohl in der Ausfallüberwachungssteuerung, in anderer Ausführung in der Mastersteuerung abgelegt sein. Hierdurch ist sichergestellt, dass durch die Antriebseinrichtung angetriebene Geräte vor Zerstörung geschützt sind.

In weiterer Ausgestaltung besteht das mit dem Aktor in Reihe schaltbare elektrische Bauteil aus mehreren, miteinander schaltungstechnisch in Reihe zu- und/oder abschaltbaren elektrischen Einzelbauteilen, also aus einer Bauteilekaskade. Diese Bauteilekaskade kann z. B. aus Ohm'schen Einzelwiderständen bestehen, die in ihrer Summe den Wert des erforderlichen Gesamtwiderstandes bilden. Hierbei ist jedem der Einzelbauteile ein vorgegebener elektrischer Wert eingeprägt, der jeder für sich dem Aktor eine einzelbauteilspezifische Minimalleistung zuordnet. Ein oder mehrere Schalter ermöglichen, dass jedes Einzelbauteil oder mehrere oder alle Einzelbauteile zu- oder abschaltbar sind. Die Schalter können je nach Bedarf so ausgebildet sein, dass eine anwendungstypische einmalige Vorwahl einer Minimalleistung des Aktors vorgenommen wird. Außerdem ist bzw. sind der bzw. die Schalter auch auf veränderliche, jeweils bedarfsbezogene Minimalleistungen - auch während des Betriebes - ausgelegt.

Durch eine Einstellbarkeit der minimalen Aktorleistung ist die Antriebseinrichtung für unterschiedliche Anwendungen einsetzbar, bei denen jeweils eine unterschiedliche anlagenspezifische Minimalleistung des Aktors gefordert ist. Diese erweiterte Ausführung der Antriebseinheit ist mit lediglich geringem zusätzlichen Kostenaufwand belastet. Sie erspart jedoch ein Vielfaches dieses Kostenaufwandes an Logistikkosten.

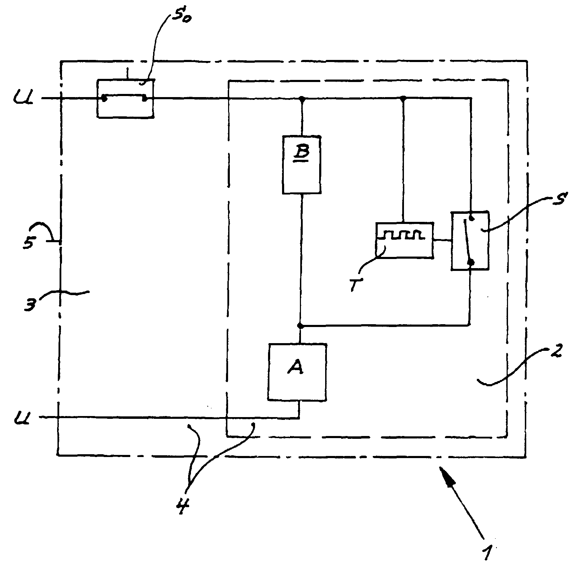

Nachfolgend wird anhand der Zeichnung eine nach der Erfindung ausgebildete Antriebseinrichtung beschrieben. Die Zeichnung zeigt schematisch ein Blockschaltbild einer Antriebseinrichtung.

Die Antriebseinrichtung 1 besteht aus einem Aktor A sowie einer ersten Steuerung 2 und einer übergeordneten Ausfallüberwachungssteuerung 3, an welche eine Versorgungsspannung U angelegt ist. Die Ausfallüberwachungssteuerung 3 weist den Eingang für eine Signalstrecke 5 auf, auf der ein z. B. bidirektionaler Datenaustausch zwischen einer nicht dargestellten Mastersteuerung und der Steuereinrichtung 4, bestehend aus der ersten Steuerung 2 und der Ausfallüberwachungssteuerung 3, und dem Aktor A erfolgt.

Der Aktor A ist mit einem elektrischen Bauteil B, z. B. einem Ohm'schen Widerstand, elektrisch in Reihe geschaltet und an das Versorgungsnetz U gelegt und wird über die Steuerung 2 angesteuert, die den Schalter S aufweist, welchem ein Taktgeber T vorgeschaltet ist. Der ersten Steuerung 2 ist die Ausfallüberwachungssteuerung 3 hierarchisch übergeordnet, die ihrerseits einen Schalter S₀ zum Ein- und Ausschalten der ersten Steuerung 2 einschließt. Die Ausfallüberwachungssteuerung 3 übernimmt die Überwachung des Aktors A und der ersten Steuerung 2 und bildet somit die Steuereinrichtung 4. Der Schalter S₀ ist geschlossen, während der Schalter S geöffnet ist. Somit steht dem Aktor A über das Bauteil B eine Grundspannung zur Verfügung.

Das bedeutet, dass in diesem ersten Betriebszustand der Aktor A mit seiner vorgegebenen Minimalleistung fährt. Wird der Taktgeber T aktiviert, so wird hierdurch in entsprechender Taktvorgabe der Schalter S geschlossen und geöffnet. In dem zweiten Betriebszustand, in dem der Schalter S geschlossen ist, ist die Reihenschaltung des Bauteiles B mit dem Aktor A in der Weise aufgehoben, dass das Bauteil B überbrückt, der Aktor direkt über das Versorgungsnetz U an die Maximalspannung gelegt ist und sich am Aktor somit ein entsprechend höherer Stromwert einstellt. In dieser Taktphase erhöht sich selbstverständlich die abgegebene Leistung des Aktors A. Wird der Schalter S geöffnet, ist das Bauteil B wieder mit dem Aktor A in Reihe geschaltet, wodurch der Aktor wieder mit der Grundspannung versorgt ist. Bei dieser Abschaltung durch das Öffnen des Schalters S entsteht im Aktor A eine kurzfristige Spannungsinduktion, die auf den Wert eines Vielfachen der Versorgungsspannung ansteigen kann. Durch die erfindungsgemäße Art der Ansteuerung der Antriebseinrichtung fließt die erhöhte Induktionsspannung, durch das Bauteil B gedämpft, nur zu einem meist vernachlässigbaren Teil in das Versorgungsnetz zurück. Die ebenfalls durch die Abschaltinduktion hervorgerufenen elektromagnetischen Felder, die in die Umgebung der Antriebseinrichtung einstreuen, sind ebenfalls stark gedämpft.

Wird z. B. angenommen, dass der Aktor A ein Elektromotor mit umlaufender Schwungmasse ist, so erhöht sich bei geschlossenem Schalter S die Drehzahl des Aktors A, während sich diese bei geöffnetem Schalter S wieder reduziert. Die Spannungserhöhung durch die Abschaltinduktion des Aktors A wird auch hier dem Bauteil B zugeführt, welches dann als Dämpfung für die Induktionsspannung wirkt.

Dadurch, dass der Aktor von seiner Minimalleistung her auf eine höhere Leistungsabgabe hin angesteuert wird, ergibt sich ein "weiches" Hochfahren. Auch ein eventuelles Lagerspiel in Lagern von z. B. angetriebenen Geräten verursacht hierdurch weniger Lagergeräusche. In invertierter Schaltfolge gilt dieses auch für das Herunterfahren der Leistung von einer höheren auf eine niedrigere Leistung.

Der Schalter S kann sowohl ein kontaktbehaftetes Relais bzw. Schütz sein oder auch ein kontaktloser Schalter, wie z. B. ein Transistor oder Thyristor. Unter "Aktor" sind u. a. alle möglichen elektrischen Stellglieder und Antriebe zu verstehen.

Die Vorteile der erfindungsgemäßen Antriebseinrichtung liegen insbesondere darin, dass der Aktor zwischen der Minimal- und der Maximalleistung durch einfache Pulsbreitenmodulation variabel betrieben ist. Weiterhin vorteilhaft wirkt sich das Verhalten der Antriebseinrichtung auch bezüglich elektrisch- und elektromagnetisch erzeugter Störgrößen aus, die nur gedämpft in das Versorgungsnetz bzw. in die Signalstrecke oder in die Umgebung einstreuen, da einerseits die pulsbreitenmodulierte Leistungserhöhung immer von einer Grundspannung und somit von einer Minimalleistung des Aktors ausgeht und andererseits das Bauteil B gleichzeitig als Dämpfung der Induktionsspannung beim Abschalten des Aktors A wirkt. Dadurch, dass die Leistungserhöhung des Aktors stets von einer Minimalleistung ausgeht, zeigt sich weiterhin eine erhebliche Reduzierung der Aktorgeräusche.

## Patentansprüche

1. Elektrisch ansteuerbare Antriebseinrichtung (1) mit wenigstens einem elektrisch betreibbaren Aktor (A) und einer Steuerung (2) mit zugehörigem Schalter (S), durch welchen der Aktor (A) in einem elektrisch eingeschalteten ersten Betriebszustand mit einer Grundspannung betrieben ist, um eingeschaltet eine Minimalleistung abzugeben, wobei der Schalter (S) den Aktor (A) in einem zweiten Betriebszustand zur Abgabe einer Maximalleistung auf einen höheren maximalen Spannungswert schaltet und bei Bedarf den Aktor (A) wieder auf die Grundspannung zurückschaltet, dadurch gekennzeichnet, dass zur variablen Vorgabe von Leistungen zwischen der Minimal- und der Maximalleistung des Aktors (A) der Grundspannung eine höhere Spannung als die Grundspannung variabel so zuschaltbar ist oder die Grundspannung durch die höhere Spannung variabel so ersetzbar ist, dass der Effektivwert der am Aktor (A) anliegenden Spannung variabel zwischen der Grundspannung und der Maximalspannung einstellbar ist.

2. Antriebseinrichtung nach Anspruch 1, dadurch gekennzeichnet, dass die erwähnte höhere Spannung pulsbreitenmoduliert ist, dass zur variablen Vorgabe von Leistungen zwischen der Minimal- und der Maximalleistung der Grundspannung die pulsbreitenmodulierte Spannung variabel so zuschaltbar ist oder die Grundspannung durch die pulsbreitenmodulierte Spannung variabel so ersetzbar ist, dass der Effektivwert der am Aktor (A) anliegenden Spannung variabel zwischen der Grundspannung und der Maximalspannung einstellbar ist.

3. Antriebseinrichtung nach Anspruch 2, dadurch gekennzeichnet. dass bei offenem Schalter (S) der Aktor (A) mit der Grundspannung und bei geschlossenem Schalter (S) mit der von der Pulsbreite abhängigen höheren Spannung versorgbar ist.

4. Antriebseinrichtung nach einem der Ansprüche 1 bis 3, dadurch gekennzeichnet, dass der Schalter (S) parallel zu einem Bauteil (B) als elektrischer Verbraucher liegt und dieses Bauteil (B) in geschlossenem Zustand überbrückt und dass der Aktor (A) für die Zeit des geschlossenen Zustandes des Schalters mit der Maximalspannung betrieben wird.

5. Antriebseinrichtung nach Anspruch 4, dadurch gekennzeichnet, dass dem Bauteil (B) ein durch eine Ansteuerung in seinen Werten änderbarer Widerstand parallel zu- und abschaltbar zugeordnet ist.

6. Antriebseinrichtung nach einem der vorherigen Ansprüche, dadurch gekennzeichnet, dass der Aktor (A) im Falle eines Defektes einer Steuereinrichtung (4) immer entweder mit der Grundspannung oder der Maximalspannung betrieben wird.

7. Antriebseinrichtung nach einem der vorherigen Ansprüche, dadurch gekennzeichnet, dass sie buskompatibel ist.

8. Antriebseinrichtung nach Anspruch 7, dadurch gekennzeichnet, dass die Energieversorgung der Antriebseinrichtung aus einem Bussystem erfolgt.

9. Antriebseinrichtung nach einem der Ansprüche 1 bis 7, dadurch gekennzeichnet, dass die Energieversorgung der Antriebseinrichtung durch wenigstens eine separate Einspeisung erfolgt.

10. Antriebseinrichtung nach einem der vorherigen Ansprüche, dadurch gekennzeichnet, dass die Grundspannung vorwählbar einstellbar ist.
